# EUROPEAN PATENT APPLICATION

(11) **EP 4 841 916 A1**
(43) Date of publication of application: **18.11.2026**
(21) Application number: 25175572.4
(22) Date of filing: 12.05.2025
(51) Int. Cl.: H04B 10/70, H04L 9/08

(54) **CLIENT-CONTROLLED QUANTUM MEMORY SYSTEM AND ENTANGLEMENT DISTRIBUTION AS A SERVICE**

(71) Applicant: Deutsche Telekom AG, 53113 Bonn (DE)
(72) Inventor: Geitz, Marc, 58089 Hagen (DE); Döring, Ronny, 16775 Sonnenberg (DE); Yin, Ming, 16341 Panketal (DE); Braun, Ralf-Peter, 12305 Berlin (DE); Ritter, Michaela, 10551 Berlin (DE); Ribeiro Sena, Matheus, 14129 Berlin (DE)
(74) Representative: karo IP

(57) **Abstract**

A method and system for Providing Entangled Quantum States to Applications, comprising:
• a client-controlled quantum memory configured to receive, store, and/or provide entangled quantum states for use by an application,
• a Quantum mechanical API configured to send photon A obtained from the client-controlled quantum memory to a quantum service provider, wherein photon A and its corresponding atomic state in the client-controlled quantum memory, atom A, are in an entanglement state,
• a Classical API configured to communicate with the quantum service provider, wherein the Classical API is configured to send a request for receiving entangled quantum states from the quantum service provider and/or to transmit results of an Entanglement Measurement, in particular Bell State Measurement (BSM), performed on photon A from the quantum service provider,
• wherein the system is configured to:
∘ store entangled quantum states independently of the quantum service provider,
∘ enable applications, in particular a quantum application of the client system, to access pre-stored entangled quantum states directly from the client-controlled quantum memory if the Entanglement Measurement was positive.

## Description

The invention relates to techniques, in particular a method and systems, in the field of quantum communication networks, particularly to the generation, distribution, storage, and provision of entangled quantum states. More specifically, the invention extends Entanglement Distribution as a Service (EDaaS) by enabling client-controlled quantum memory systems, allowing direct access and management of entangled quantum states by client applications.

The usage of quantum protocols and quantum applications relies on the controlled distribution and utilization of entangled quantum states across different nodes. In conventional EDaaS architectures, quantum service providers generate, store, and manage entangled quantum states, which are then distributed to network nodes upon request of the application. This approach ensures a centralized, well-managed quantum resource pool but also presents several limitations.

A drawback of current systems is the lack of client control over quantum entanglement resources. Existing EDaaS architectures restrict access to entangled states to service providers only, preventing client applications from directly managing entanglement resources at their premise. As a result, users/clients and the respective applications cannot store, retrieve, or control quantum states independently, limiting their flexibility in executing quantum communication protocols. Without localized quantum storage at the application level, clients cannot optimize entanglement usage in real time.

The task of the invention is to at least partially overcome the disadvantages of the state of the art by providing a more flexible quantum entanglement distribution. In particular, the invention aims to enable direct client-side storage and management of entangled quantum states.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to the invention, a Client-Controlled Quantum Memory System for Providing Entangled Quantum States to Applications is provided, comprising:
a client-controlled quantum memory configured to receive, store, and/or provide entangled quantum states for use by an application;
a Quantum API configured to send photon A obtained from the client-controlled quantum memory to a quantum service provider, wherein photon A and its corresponding atomic state in the client-controlled quantum memory, atom A, are in an entanglement state; atom A is the "physical" infrastructure of the quantum memory that has produced the photon A;
a Classical API configured to communicate with the quantum service provider, wherein the Classical API is configured to send a request of a result of an Entanglement Measurement, in particular a Bell State Measurement (BSM) of the quantum state of photon A with a further quantum state to from the quantum service provider and/or to receive result of the Entanglement Measurement performed on photon A by the quantum service provider, the Classical API can also be configured to receive an Entanglement Measurement performed on a further photon, in particular B, by the quantum service provider or by a further quantum service provider; the Classical API can also receive the information that both BSM were positive, however, this includes the information that the BSM regarding photon A was positive;
wherein the Client-Controlled Quantum Memory system is configured to store entangled quantum states independently of the quantum service provider and enable applications, in particular a quantum application of the Client-Controlled Quantum Memory system, to access stored entangled quantum states directly from the client-controlled quantum memory if the at least one Entanglement Measurement (Entanglement Swapping by a Bell State Measurement) was positive. In the case of two different Client-Controlled Quantum Memory System, the system can receive two Entanglement Measurement results. One result of its own photon A and the other result of a photon B of the second Client-Controlled Quantum Memory System. As photon B - which will be explained in greater detail below - shall be the entangled partner of atom B and/or photon A, the respective entanglement measurement needs also to the positive. In this case the Client-Controlled Quantum Memory System can receive both measurement results and enable the access to the start entangled quantum state only if both measurements are positive.

Another term for Client-Controlled Quantum Memory System could be User-Controlled Quantum Memory System. Within the context both terms mean that the user or the client can be in a way independent from the quantum service provider that they can run their own infrastructure with their own applications. The photon can be sent over the Quantum API to the quantum service provider or directly to a network node of the quantum service provider, wherein the network node comprises a quantum memory with stored quantum states. In case the photon is sent over the Quantum API of the quantum service provider, the quantum service provider can forward the photon to one of its network nodes. The same holds for the request sent over the Classical API. However, finally both communications need to be established with the very same network node of the quantum service provider in case of photon A.

This claim introduces a quantum memory system that allows client applications to store and manage entangled quantum states to execute client-side applications. By enabling the client-controlled quantum memory to receive, store, and provide entangled states, applications gain direct access to quantum resources, improving flexibility and reducing dependence on external entanglement distribution networks.

The Quantum API facilitates entanglement operations by transmitting photons between the client and the service provider, ensuring the establishment of entangled states across network nodes. The Classical API coordinates classical communication, such as entanglement requests and measurement results, and enables efficient synchronization between the client and provider.

A key technical advantage of this system is that it allows applications to access stored entangled quantum states independently, reducing latency and improving operational efficiency in quantum networking. By removing the exclusive reliance on real-time entanglement generation by the service provider, the invention enhances scalability and enables more efficient quantum communication protocols. In particular, more than one service provider could deliver the entangled quantum states to the Client-Controlled Quantum Memory.

In an embodiment, the Client-Controlled Quantum Memory System further comprises a client-metadata memory, wherein a dataset A of the client-metadata memory stores the following information: a logical ID "ID:Client:AB" of photon A and/or atom A; a result of the Entanglement Measurement of photon A, a result of the Entanglement Measurement of photon B; a physical storage address of the atom A within the client-controlled quantum memory; and/or a timestamp indicating the timepoint at which the entanglement state was generated. The logical ID "ID:Client:AB can be calculated as an unique identifier (at least unique for the communication partners that take part in the process) based on the timestamp, in particular based on the timestamp and of an ID Quantum Link of the respective session. The timestamp can be the timestamp of the photon emission or the timestamp of the BSM measurement. The quantum link is a physical connection between network nodes, defined by a transmission medium, such as a wired or wireless channel, and/or a specific frequency allocation.

As there will be a steady rate of photons in a real-life scenario, the timestamp is needed to identify the respective photons. This is the reason why the calculation of the logical ID "ID:Client:AB needs a time stamp information. For example, the logical ID is "ID:Client:AB_Timestamp_QuantumlinkID". ID:Client:AB means that both the quantum state A and its entangled partner quantum state B have the common ID:Client:AB.

The dataset is named dataset A simply because its relation to photon A. For a photon B, it could be named dataset B.

This claim introduces a metadata storage system within the client-controlled quantum memory, enabling structured tracking and management of entangled quantum states. Furthermore, having the client-metadata that is associated with the Quantum Memory provides a more flexible solution and does reduce needed resources of the Quantum Memory because requests are sent to the client-metadata memory first. The client-metadata memory can then trigger the associated actions from the quantum memory.

Storing the Entanglement Measurement result allows the system to determine whether a given quantum state is valid and usable for further quantum communication. The physical storage address provides a precise location reference within the quantum memory, enabling fast and efficient state retrieval. Additionally, the timestamp ensures accurate tracking of when the entanglement was established, which is critical for coherence management and synchronization with quantum networking protocols. To perform entanglement swapping, photon A (from the application) and photon B of a the same or a further Client-Controlled Quantum Memory System must undergo an Entanglement Measurement, in particular a Bell State Measurement (BSM), which results in the destruction of both photons. If certain detector signatures occur as the result of the BSM, the entanglement is swapped onto the quantum states that were initially entangled with the photons-specifically, onto atom A in the client-controlled quantum memory system and atom C in a second network node. The BSM transmits its results to the quantum service provider and the client-controlled quantum memory system. In an enhanced embodiment, it is advantageous for the result of the Entanglement Measurement not only to be transmitted from the quantum service provider to the application A, but-where applicable-also to application B. This is particularly relevant in cases where entanglement swapping is performed at two different provider nodes, such as at Provider Node A and Provider Node B. If a successful entanglement swap is detected at both nodes, the result is that the quantum states at application A and application B are entangled. Since, in practice, the entanglement swaps at the two provider nodes may occur at different times, it is the responsibility of the quantum service provider infrastructure to evaluate the logical conjunction (logical AND) of both Entanglement Measurement results. Preferably, the provider infrastructure transmits a single notification to both applications A and B only when both entanglement swaps have successfully occurred, rather than issuing separate notifications for each partial result. This approach simplifies state tracking and avoids premature signaling at the application level. Both systems update their respective entries in the classical metadata memory. The BSM results do not need to be stored; they only need to be processed for entanglement state updates in the metadata memory node A and C.

The technical advantages of this approach include improved data organization, faster retrieval of quantum states, and enhanced traceability of entanglement operations. By maintaining structured metadata, the system can dynamically manage entangled states, optimize memory usage, and facilitate error detection and correction in quantum networking applications.

In an embodiment, the Client-Controlled Quantum Memory System further comprises a processing unit configured to:
Retrieve, in particular from the client-metadata memory, the result of the Entanglement Measurement of photon A and B and evaluate both results of the Entanglement Measurement and/or to process entanglement state updates of the BSM, wherein photon B having the same Logical ID "ID:Client: AB" as photon A;
if both results are positive, trigger the exposure of the quantum states A and/or B related to photons A and/or B to the quantum application. A positive result of both photons means that photon A and B have been projected into a Bell State.

This embodiment introduces a processing unit responsible for verifying entanglement measurement results before allowing access to the entangled quantum states. By retrieving, the system ensures that only successfully entangled quantum states are exposed to applications.

A Bell State Measurement (BSM) requires two photons, which are sent through a beam splitter, where their interference is analyzed by two single-photon detectors. If only one detector registers a photon (either on the right or left), the system projects the quantum state onto a Bell state, indicating that the entanglement has been swapped. If the photons involved in the measurement are designated photon A and photon B, where photon A is entangled with atom A, and atom B is entangled with atom C in the Entanglement Distribution as a Service (EDaaS) system, then after the BSM, atom A and atom C become entangled.

The general process operates as follows:
Application A continuously transmits photons to the quantum memory of node B (the provider's node). Node B stores the received photons and updates its metadata memory (MM), in particular with the corresponding ID:Client:AB of the photon.

Through the EDaaS infrastructure, node B continuously stores entangled states with node C (another node of the provider or a further provider's node) and updates its MM to reflect these entanglement relationships.

When an entanglement swap at node B is required, node B queries its MM to identify two atoms that are entangled - one with node A and one with node C. The MM provides the corresponding logical IDs (LPIDs) and physical IDs (PhylDs) of these atoms. Once identified, the logical IDs are marked as "used", preventing further reuse.

Using the retrieved physical IDs, node B releases the corresponding photons and directs them to a BSM setup to perform the Entanglement Measurement.

The result of the BSM (successful entanglement swap: yes/no) is then transmitted to nodes A and C. In an alternative embodiment, the quantum service provider infrastructure may be configured to retain the result of a successful Entanglement Measurement (BSM) internally, without immediately forwarding the result to the application. Instead, the provider infrastructure waits until a second, corresponding entanglement swap has also been successfully completed-for example, between Application B and a further provider node C. Only once both entanglement swaps have been successfully executed, the provider infrastructure notifies the respective applications and confirms the successful establishment of a two-party entanglement link. This approach ensures that the applications only receive complete and successful swap confirmations, reducing their processing overhead. Accordingly, the quantum service provider infrastructure acts as a service entity, abstracting and managing the underlying quantum processes in a manner that is transparent to the applications and minimizing their involvement in low-level quantum state handling. Upon receiving the result, nodes A and C update their respective MMs to reflect the new entanglement relationships. Specifically, the MM entries now indicate that the atoms with the respective physical IDs have new entanglement partners.

A new logical photon ID can then be computed based on the partner atom, timestamp of the (latest) BSM, and/or a network link identifier, ensuring the entanglement state is accurately tracked - which is important because a steady flow of entanglement states is being delivered. This accurately tracking requires the timing synchronization of the network nodes.

The evaluation of both photons A and B is crucial, as it guarantees that the entanglement swapping process was completed successfully. If both results indicate successful entanglement, the system then authorizes the quantum application to access the entangled states, ensuring reliable quantum communication.

In an embodiment, the Client-Controlled Quantum Memory System further comprises a time-synchronization module configured to synchronize the time between the quantum service provider and the application to establish unified time bins for processing entanglement swapping operations.

This introduces a time-synchronization module that ensures precise timing coordination between the client system and the quantum service provider. The module establishes unified time bins, which define precise time intervals for processing quantum state transfers.

The time-synchronization module provides several key advantages that enhance the efficiency and reliability of entanglement-based quantum communication.

One major benefit is that it ensures precise arrival time management of quantum states into storage systems and Bell State Measurement devices. Since a BSM requires two identical photons to interfere at the same time, accurate synchronization guarantees that incoming quantum states reach the measurement setup simultaneously, thereby maximizing the probability of successful entanglement swapping. Additionally, decoherence is not a risk in this system. The generation time of each quantum state is recorded in the metadata memory allowing for efficient photon selection. By referencing the Logical Pair ID (LPID), the system always selects the youngest available photons for entanglement operations, ensuring that quantum states are processed within their optimal coherence time and preventing decoherence-related errors. Furthermore, the synchronization module enables entanglement swapping and quantum state storage to be performed within an optimal coherence window. This refers to the specific time frame in which the storage system or BSM setup is actively expecting an incoming photon. By aligning photon arrivals with this pre-defined time window, the system improves processing efficiency and reduces the likelihood of lost or unrecognized quantum states. An essential requirement for the entire technology is the concept of heralding-where the receiving devices must be pre-informed about the exact arrival time of quantum signals to ensure proper processing. Without precise timing, the quantum memory or BSM device would be unable to detect and process the incoming quantum states effectively. The time-synchronization module thus serves as a critical component, enabling accurate scheduling and coordination of quantum signal arrivals across the network.

In an embodiment, the Client-Controlled Quantum Memory System is configured such that a request for receiving entangled quantum states sent over the Classical API comprises: a required rate for entanglement swapping; a name or ID of a network node, wherein the network node comprises a quantum memory in particular of the quantum service provider; a name or ID of the quantum service provider; and/or a location of the Client-Controlled Quantum Memory System. The request can be realized by using a quantum link that is a classical control link for physical connections. The quantum link will be explained in more detail later on.

This embodiment enhances communication between the client and the quantum service provider by enabling the transmission of specific request parameters through the Classical API. By including a required entanglement swapping rate, the provider can allocate the necessary resources, perform load balancing, and assign network nodes that have a suitable quantum memory available. Specifying a network node ID allows the client to request entanglement from a specific node, which may be known to deliver high-quality results, for example, due to spatial proximity. Alternatively, the quantum service provider can assign a suitable node and instruct the client where to send photon A, ensuring an efficient and controlled entanglement swapping process. Providing the client's location allows the provider to preselect an optimal network node, favoring one that is geographically close to the client. This minimizes transmission losses and synchronization delays, improving the reliability and efficiency of entanglement distribution.

In an embodiment, the Client-Controlled Quantum Memory System further comprises a link protocol configured to assess the rate of positive Entanglement Measurements and:
if the rate of positive Entanglement Measurements is higher than a certain threshold, decrease the rate of transmission of photons, and/or
if the rate of positive Entanglement Measurements is lower than a certain threshold, increase the rate of transmission of photons and/or select another network node.

This embodiment introduces an adaptive error-handling mechanism that dynamically adjusts the transmission rate of photons based on the success rate of entanglement measurements. The EDaaS infrastructure of the quantum service provider may need to operate at a higher speed and distribute a greater number of entangled quantum states. Additionally, the final step from the first network node to the client-controlled quantum memory system must be performed more quickly. This can be achieved by increasing the entanglement generation rate at the quantum sources, modifying routing paths within the EDaaS system-for example, performing more entanglement swaps between the client-controlled quantum memory system and the second network node instead of between other network nodes-increasing the application request rate for entangled quantum states, and enhancing the Bell State Measurement (BSM) rate to process entanglement operations more efficiently. The link management of the client-controlled quantum memory system, in coordination with the EDaaS system, must ensure the optimization of these processes. By monitoring entanglement success rates, the system can optimize resource usage and improve the efficiency of entanglement distribution. If the success rate is too high, the system reduces the transmission rate, preventing unnecessary photon generation and reducing strain on network resources. Conversely, if the success rate is too low, the system increases the photon transmission rate or selects an alternative network node that may provide better entanglement quality. An advantage of this feature is that it ensures optimal use of quantum network resources, preventing congestion while maintaining a stable entanglement supply. Additionally, the ability to switch to a different network node improves fault tolerance and increases the likelihood of establishing successful entanglement, making the system more resilient to network fluctuations.

According a second aspect of the invention, a System for Distributing Entangled States as a Service is disclosed, comprising:
a client-side quantum memory system as described above,
a first network node of a quantum service provider comprising a first quantum memory, in particular a first provider quantum memory, configured to store entangled quantum states and wherein the first network node is configured to enable entanglement swapping,
a Quantum-exchange link established between the client-side quantum memory system and the first network node of the quantum service provider, the Quantum-exchange link being configured to transmit photon A from the client-side quantum memory system to the first quantum memory of the first network node of the quantum service provider, wherein photon A and its corresponding atomic state in the client-side quantum memory system, atom A, are in an entanglement state, the Quantum-exchange link uses the Quantum API;
a Classical link established between the client-side quantum memory system and the first network node of the quantum service provider, the Classical link being configured to transmit a request for receiving a result of an Entanglement Measurement, in particular a Bell State Measurement (BSM), from the first network node performed between the photon A and a quantum state SP₁, in particular a photon SP₁, within the first quantum memory of the quantum service provider, wherein the quantum state SP₁ has on entangled quantum state SP₂ stored in a second quantum memory of a second quantum service provider, and/or the Classical link is configured to transmit results of the to the client-side quantum memory system;
an entanglement swapping module associated to, in particular located at, the first network node of the quantum service provider, configured to perform a first Entanglement Measurement on photon A and the entangled quantum state SP1. The quantum state SP1 has a Logical ID:QSP stored in the first MM of the first network node of the quantum service provider, and evaluate a result of the first Entanglement Measurement and provide the result to the Classical API. The quantum state SP₂ stored in a second quantum memory of the second quantum service provider also has the Logical ID:QSP, so that the BSM measurements at both quantum service provider are performed on the entangled pair. Both quantum service provider can share the Logical ID:QSP over a further classical link established between them.

This claim defines a complete entanglement distribution system, integrating both client-side and provider-side components for managing entangled quantum states. The client-side quantum memory system allows clients to request and store entangled states, while the network node of the quantum service provider acts as an intermediary that facilitates entanglement swapping. The Quantum API ensures a transfer of photon A from the client system to the provider's quantum memory is configured to maintain entanglement with its corresponding atomic state. The Classical API handles classical communication, including entanglement requests and measurement result exchanges, ensuring coordination between the client and provider.

A key technical advantage of this system is the structured entanglement swapping process, enabled by the entanglement swapping module at the provider's network node. This module can perform the Bell State Measurements (BSM) to establish entanglement between the client-side quantum memory and a stored quantum state in the provider's network. By evaluating the measurement result and communicating it via the Classical API, the system ensures that only this information is provided to the application and to the second network node further proceeding decision can be offloaded to the client. It is advantageous if the quantum service provider infrastructure encapsulates the results of both Entanglement Measurements and only notifies the applications once both BSMs have been successful. This allows the applications to process only validated entanglement events and relieves them from having to handle partial or intermediate states. The invention enables efficient and scalable entanglement distribution, allowing clients to access on-demand quantum entanglement services. By integrating both classical and quantum interfaces, it enhances flexibility, reliability, and resource optimization in quantum networking.

In an embodiment, the System comprises a first and a second client-side quantum memory as described above, and a first and a second network node of a quantum service provider as described above. The first and the second Client-Controlled Quantum Memory System can be connected via a classical channel, each Client-Controlled Quantum Memory System is connected with the respective network node of a quantum service provider as described above. The first and the second network node can also be connected via classical communication means.

In an embodiment, the System for Distributing Entangled States as a Service further comprises:
a first provider-metadata memory, wherein a dataset of the certain entangled quantum state having the Logical ID:QSP comprises information, in particular the location and/or the communication address, about a second quantum memory of the quantum service provider where the respective entangled partner quantum state having the same Logical ID:QSP is stored in a second provider-metadata memory. The second quantum memory can be located at the network node of the first quantum memory or at a further network node.
A processing unit of the system, in particular implemented in the first network node, queries the metadata memory (MM) at network node A to identify two atoms that are each entangled with the application and the second network node, respectively. This identification is performed based on the ID:QSP and the ID:Client_AB. The most recent atoms can be selected based on their physical ID (PhylD), the corresponding photons are released, and the Bell State Measurement is performed.

The first provider-metadata memory maintains records of where each entangled partner quantum state is stored, allowing the system to efficiently locate and manage quantum resources. The first provider-processing unit can hence coordinate entanglement swapping operations. This information is transmitted via the Classical API to the Client-Controlled Quantum Memory System and/or to the second network node. An advantage of this feature is optimized entanglement state management across a distributed quantum network. By keeping track of the locations of entangled quantum states, the system ensures efficient routing of quantum resources, reducing the risk of state mismatch or data loss.

In an embodiment, the System for Distributing Entangled States as a Service further comprises a second network node of the quantum service provider, wherein the second network node comprises:
a Quantum API interface for receiving photon B from a second client-side quantum memory system,
a Classical API for communication with the second client-side quantum memory system for i) receiving the Logical ID:QSP, and/or ii) providing a result of a second Entanglement Measurement to the second client-side quantum memory system,
a second quantum memory configured to store the respective entangled partner quantum state having the same Logical ID:QSP in a second MM, and wherein the entangled partner quantum state having the same Logical ID:QSP is allocated within the second quantum memory;
a second entanglement swapping module configured to: i) perform the second Entanglement Measurement on photon B and the entangled quantum state having the Logical ID:QSP, and ii) evaluate a result of the second Entanglement Measurement, and provide the result to the Classical API.

The second network node receives photon B from the second client-side quantum memory system through the Quantum API interface, allowing it to store it into its QM. This process is preferably carried out step by step via the quantum memory, allowing the operations to be automated in synchrony with the system's timing architecture.

The Classical API facilitates necessary data exchanges, including receiving the Logical ID:QSP to ensure that the correct paired entangled quantum states are used and providing the result of the second Entanglement Measurement back to the client system and the other provider node. This ensures that the client has full visibility into whether the entanglement process was successful. This process may be encapsulated such that the quantum service provider infrastructure transmits a single notification to the applications only if both Entanglement Measurements (BSMs) have been successful.

A technical advantage of this approach is that it enables distributed entanglement swapping, ensuring that quantum entanglement can be established between distant nodes efficiently. The underlying reason, as identified herein, is that two Bell State Measurement (BSM) stations are required in order to enable entanglement swapping from two network nodes to two separate applications. The inclusion of a Classical API for communication ensures that entanglement status updates are promptly delivered to the client system, improving the transparency and robustness of quantum state management.

In an embodiment, the System for Distributing Entangled States as a Service further comprises a provider-timing-synchronization module at both the first network node and the second network node, wherein the provider-timing-synchronization modules are configured to synchronize the timing between the first network node, the second network node, and the time-synchronization module of the client-controlled quantum memory system to ensure that entanglement swapping operations are performed within unified time bins. Furthermore, the client-controlled quantum memory system is configured to negotiate a start time bin, an end time bin, and/or a repetition frequency.

This embodiment introduces a precise timing synchronization mechanism that ensures all quantum operations within the network occur within a coordinated time frame. The ability of the client-controlled quantum memory system to negotiate time bins and repetition frequency provides dynamic control over entanglement swapping operations. By defining a start and end time bin, the system ensures that quantum state exchanges occur within an optimal coherence window, reducing latency and timing errors (which is "heralding"). The ability to set a repetition frequency allows the system to optimize the use of entanglement resources, ensuring efficient scheduling of quantum transmissions based on network conditions and demand.

In an embodiment, the System for Distributing Entangled States as a Service is configured such that the quantum service provider is a telecommunication provider.

This embodiment establishes a direct integration of quantum entanglement services into existing telecommunication infrastructures. By defining the telecommunication provider as the entity responsible for managing quantum entanglement distribution, the system aligns with real-world deployment scenarios, where telecom networks serve as the backbone for both classical and quantum communication. Telecommunication providers already have established fiber-optic networks, data centers, and network management systems, which can be extended to support quantum state distribution. Furthermore, integrating quantum communication into telecom networks enables seamless hybrid quantum-classical networking, where entangled quantum states can be transmitted alongside conventional data services.

According to a third aspect of the invention, a method for providing entangled quantum states to a client by using a Client-Controlled Quantum Memory System or at least two Client-Controlled Quantum Memory Systems described above and a System for Distributing Entangled States as described above is disclosed, the method comprising the following steps, in particular in the following order a. to h.:
a. sending, by a first client-controlled quantum memory system, a photon A that is in an entanglement state with an atom A to a first network node of the quantum service provider,
b. receiving, by the first network node, photon A and performing an Entanglement Measurement, in particular a Bell State Measurement (BSM), on photon A and a certain entangled quantum state provided by the first network node, wherein the quantum state has a Logical ID:QSP,
c. extracting, by a first provider-processing unit of the first network node, information where a respective entangled partner quantum state having the same Logical ID:QSP is stored, this information can be stored in the metadata database under the respective Logical Pair ID (LPID), and can be accessed directly by the link protocol of the quantum link as needed;
d. providing, by the first network node, the first result of the Entanglement Measurement and the information about the respective entangled partner quantum state having the same Logical ID:QSP to the first provider-controlled quantum memory system, a second client-controlled quantum memory system and/or a second network node,
e. sending, by the second or the first client-controlled quantum memory system, a photon B that is in an entanglement state with an atom B at the first or second client memory to the second network node of the quantum service provider, in particular if the first result of the Entanglement Measurement was positive, the process operates in a well-timed and coordinated manner, with the link protocol managing and orchestrating the sequence of operations;
f. receiving, by the second network node, photon B and performing an Entanglement Measurement on photon B and the entangled partner quantum state having the Logical ID:QSP provided by the first network node, the link protocol selects an entangled pair on the first network node querying its MM, then communicates with the second network node and transmits the associated Logical Pair ID. Upon receiving the LPID, the second network node retrieves the corresponding photon from its local quantum memory;
g. providing, by the second network node, a second result of the Entanglement Measurement to the Classical API for transmission to the client-controlled quantum memory system, the second client-controlled quantum memory system and/or to the first network node;
h. determining, by the first and/or the client-controlled quantum memory system, based on the received Entanglement Measurement results from the first and second network nodes, whether both the first and the second Entanglement Measurements were positive and hence entanglement swapping was successful, and if so, making the entangled quantum states available for an application, in particular a quantum application.

In one embodiment, the process operates as follows: Applications A and B continuously transmit photons A and B, respectively. A specific sequence-such as performing one successful BSM before the other-is not required. Instead, the first network node A and the second network Node B each select an entangled quantum state pair with a matching Logical Pair ID. The first network node then retrieves a corresponding application photon A from its local quantum memory, while the second network node retrieves a photon B from its respective local memory. Both photons are then independently subjected to Entanglement Measurements, in particular BSMs. In approximately 25% of cases, both BSMs yield successful results. Only in such cases does the quantum service provider infrastructure notify the applications, thereby encapsulating the internal entanglement logic and relieving the applications from handling partial or intermediate results. All operations are performed in synchrony with the system's timing architecture. The order in which the applications transmit their photons is irrelevant, as the provider infrastructure coordinates entanglement swapping independently. Once both BSMs are positive, the entanglement is confirmed and reported to the applications. It is also possible that the EDaaS infrastructure informs the applications that the entanglement swaps have been successfully completed. The clients operate in a trust-based model, without performing their own verification-this responsibility is delegated to the provider infrastructure as part of the service offering.

This method describes the step-by-step process of entanglement swapping between a client-controlled quantum memory system and a quantum service provider's network infrastructure. The process begins with photon A being sent from the client system to the first network node, where BSM is performed. As a result, the entanglement is swapped at the first network node and the client shares entanglement with the remote network node, where client B is connected to.

The client system can then evaluate the measurement results received from both network nodes. If both entanglement measurements were successful, the client system can confirm that entanglement swapping has been successfully established and makes the entangled quantum states available to an application for further quantum communication tasks.

In an embodiment, the method for providing entangled quantum states to a client is configured such that the client-controlled quantum memory system starts and/or finishes a request for distributing entangled quantum states.

This embodiment introduces a mechanism where the client system actively initiates and/or completes the entanglement distribution process. By allowing the client-controlled quantum memory system to finish a request, the client has control over when to terminate the entanglement session, ensuring that entanglement swapping is only facilitated as long as the application still needs entangled quantum states which increases efficiency of the overall system.

In an embodiment, the method for providing entangled quantum states to a client is configured such that the client-controlled quantum memory system and the first and second network nodes of the quantum service provider synchronize their timing to ensure that entanglement swapping operations are performed within unified time bins, and wherein the client-controlled quantum memory system negotiates a start time bin, an end time bin, and/or a repetition frequency.

The ability of the client-controlled quantum memory system to negotiate time bins and repetition frequency provides dynamic adaptability to network conditions. By defining a start and end time bin, the system ensures that quantum state exchanges occur within a well-defined temporal window, reducing latency and synchronization errors. The ability to configure a repetition frequency allows the system to optimize entanglement distribution, ensuring that resources are used efficiently and entanglement is refreshed at an appropriate rate.

In an embodiment, the method for providing entangled quantum states to a client is configured such that the client-controlled quantum memory system stores metadata related to entanglement operations, the metadata comprising: a Logical ID associated with each entangled quantum state; results of Entanglement Measurements received from the first and second network nodes; a physical storage address of each entangled quantum state within the client-controlled quantum memory system, and/or a timestamp indicating the timepoint at which the entanglement state was generated or updated.

This embodiment introduces a metadata management system within the client-controlled quantum memory system, allowing structured tracking and monitoring of entangled quantum states. By assigning a Logical ID to each entangled quantum state, the system ensures efficient retrieval, verification, and correlation of quantum states across different network nodes. The storage of Entanglement Measurement results allows the system to determine whether entanglement swapping was successful or failed at a timepoint it really wants to make us of this information, providing valuable insights for error handling and system optimization. The physical storage address enables efficient memory management, ensuring that the client system can quickly locate and utilize stored entangled states. Additionally, the inclusion of timestamps allows for precise tracking of entanglement creation and updates, ensuring that coherence and validity periods of entangled states are properly maintained.

For the purpose of recalculating the Logical Pair ID (LPID) after the successful completion of two entanglement swaps, it is advantageous to use the timestamp of the second (i.e., later) Entanglement Measurement as a temporal reference. Additionally, a virtual link identifier may be applied, which is defined within the client-side network topology. From the perspective of the application, the quantum service provider infrastructure functions as a transparent communication link or black box. The combination of the timestamp and the virtual link identifier allows for an unambiguous reconstruction and tracking of the entangled quantum state across the distributed network environment.

In the following, preferred implementation examples of the present invention are explained with reference to the accompanying figure:
- Fig. 1:: shows an architecture of an inventive System for Distributing Entangled States as a Service to clients;
- Fig. 2:: shows the architecture of network nodes of a telecommunication provider;
- Fig. 3:: shows an inventive method for providing entangled quantum states to a client by using a Client-Controlled Quantum Memory System;
- Fig. 4: illustrates a setting-up of a quantum link;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

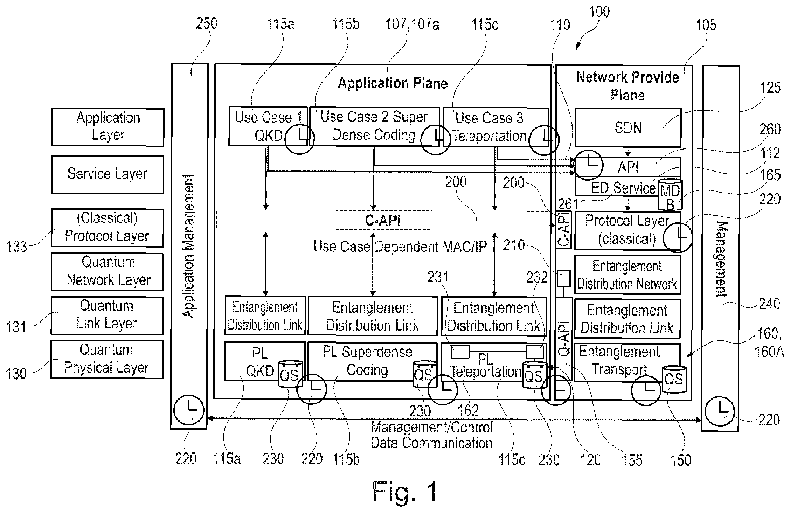

Fig. 1 describes an inventive architecture of a 'System for Distributing Entangled States as a Service to clients' 100.

The new and inventive system is based on a state-of-the-art system that will be described first and then we will explain the additional features of the invention.

Architectural elements of the System for Distributing Entangled States as a Service to clients 100 can be set-up in a quantum service provider plane 105, in particular a telecommunication provider 105 management employment 105. User systems 107 or client systems 107 using quantum communication protocols 115 such as quantum key distribution, super-dense coding, or teleportation can utilize entangled quantum states, in particular entangled photons to run their applications. For this purpose, the Entanglement Distribution Service (EDaaS) provides dedicated communication interfaces, e.g. implemented as APIs, that fulfill various services and enable communication.

At the service layer 261 level, a communication interface 110 is provided through which quantum communication applications 115a,b,c can communicate with an Entanglement Distribution module 112 of the telecommunication provider 105 to obtain the logical and physical addresses of the stored quantum mechanical states within the environment of the telecommunication provider 105. The telecommunication provider 105 can be the quantum service provider.

The communication interface 110 also enables the triggering of one or more quantum mechanical states based on a physical storage address, which are then exported via a photon push-interface over a quantum channel 120 located at the level of the quantum physical layer 130.

The communication interface 110 can provide AAA functionality (authentication, authorization, and accounting for the application) to manage access to the EDaaS service. The communication interface 110 can also provide an interface for time synchronization of the client system 107 relative to the EDaaS service. Through this interface, users' clocks can be synchronized with the clocks of the distribution service, allowing the assignment of photons to specific time slots as will be described in more detail below.

According to Fig. 1, the Entanglement Distribution Service is managed across network nodes via a Software Defined Network 125 (SDN) or an Entanglement Distribution App. For this purpose, the SDN service configuration features monitoring means, alarming means, and means that ensure that every node provides sufficient entangled states.

A quantum physical layer 130 of the EDaaS service comprises quantum optical elements (photon sources, fibers, beam splitters, single-photon detectors, frequency converters, or quantum memories). A quantum link layer 131 comprises end-to-end quantum optical connections, through which entangled photonic states can be distributed between any nodes of the quantum network. A routing layer comprises optical components that enable dynamic changes of quantum links 131A over various optical paths/links.

In the state-of-the-art, the quantum application 115 of the client system 107 can request an entangled quantum state that is stored in a quantum memory (QM) 150 at a network node of the telecommunication provider 160. The entangled state is provided to the application 115 by means of a quantum mechanical API 155 (Q-API) at the level of the quantum physical layer 130 by the telecommunication provider 105. The deployment of the telecommunication provider 105 and the client system 107 can be considered as being network nodes, particular the telecommunication provider 105 can comprise many network nodes. A network node serves as an interaction point within the network, facilitating the exchange of information between other network entities. A network node of the application 162 can comprise a client-controlled quantum memory 230, a processing unit 231 and/or a metadata memory 232.

However, due to flexibility and performance reasons it is desirable that the applications have or more direct access to the entangled quantum states.

Therefore, the invention proposes that applications 115 may control entangled photonic states at different network nodes themselves to facilitate the execution of quantum communication protocols 115 in a more direct and flexible way. Therefore, the Entanglement Distribution as a Service (EDaaS) infrastructure must be extended with capabilities that allow the distribution of entangled quantum states to quantum storage devices located at the application plane.

To fulfill these tasks, the EDaaS infrastructure is extended with further capabilities. Due to these changes, the client system 107 then becomes a Client-Controlled Quantum Memory System 107a.

First, a Classical High-Level API 200 of the EDaaS service is extended to allow client quantum applications 115 to request a result of an Entanglement Measurement regarding photonic states located at the application's premise. The Classical API 110 (C-API) operates on a classical protocol layer 133, which facilitates communication between the nodes. This classical protocol layer 133 is used to establish and maintain the quantum link 131A, enabling coordination and exchange of metadata necessary for managing entangled quantum states. Since network providers typically do not permit client applications to directly access their quantum or classical storage systems, this service is implemented as a separate component in the proposed architecture. This separation ensures that the client-controlled quantum memory system 107a operates independently while still interacting with the EDaaS infrastructure for entanglement distribution requests and while also ensuring "protection" for the quantum storage systems of the telecommunication provider 105 because direct access is not being allowed for the client applications 115.

Second, a classical protocol layer 133 is introduced into the EDaaS architecture to manage the communication between quantum applications 115 and the EDaaS infrastructure. This protocol layer 133 ensures a structured and reliable exchange of control commands, metadata, and entanglement requests, enabling efficient interaction between client-side quantum systems and the provider-side quantum network nodes. The protocol layer 133 will manage the quantum links 131A between the communication parties.

Third, the Quantum mechanical API 155 of the EDaaS infrastructure is extended to Q-OSI layer 2 - which means up to the quantum link layer 131 - to handle and process incoming quantum states.

Fourth, the EDaaS infrastructure is enhanced with a capability to store incoming photonic states and/or conduct Bell State Measurements (BSM). For this reason a Bell State Measurement-module 210 is being deployed at the quantum service provider 105 that can be a telecommunication provider 105. This capability enables entanglement swapping operations, allowing entanglement swapping from the EDaaS infrastructure to quantum memory devices located at the application's premise.

Fifth, a quantum memory 230 is provided at each quantum application 115 at the quantum physical layer 130. Those quantum memories 230 can be called client-controlled quantum memory 230 as they are associated to or implemented at the Client-Controlled Quantum Memory System 107a.

A time synchronization capability is explicitly shown by clock symbols located at the respective network entities. Timing-synchronization-modules 220 can be deployed at the application management, the applications 115, at to the entanglement transport layer, at the management system and at the EDaaS service.

A network provider management system 240 controls the devices deployed at the network provider plane, whereas an application management system 250 controls the devices deployed at the application plane. Both management systems can control the time synchronization process and communicate control data.

The entanglement distribution service (EDaaS) of the network provider is configured to successfully distribute and store entangled photonic states across the communication network, ensuring that, in principle, every network node shares and maintains entangled quantum states with any other network node.

To enable the use of entangled quantum states for quantum communication protocols 115, which are logically managed by the application provider, the application provider must be granted access to the entanglement resource. This access allows the application provider to utilize the entangled photonic states distributed by the EDaaS infrastructure to execute quantum networking operations, such as quantum key distribution (QKD), super-dense coding, or teleportation-based communication.

The Entanglement Distribution (ED) Service API 260 allows the application provider to request entangled photonic states via the Service Layer 261 with any peer network node.

A typical request comprises the name and/or ID of the another application with which the application provider intends to establish entanglement-based communication.

Upon receiving the request, the ED Service commits the request and forwards it to the protocol layer 133 for further execution. The protocol layer 133 then initiates a communication session between the requesting application and the network provider, assigning a unique classical session ID to the session. This session ID is communicated to both the application provider and the telecommunication network provider, enabling them to track and manage the entanglement request throughout the process. Two applications may decide to initiate the exchange of entangled quantum states. To that end, the applications generate a unique identifier (UUID), which is then shared with the quantum service provider infrastructure. This identifier serves as the session ID, or forms a component thereof, and is used to associate entanglement operations with a specific communication session between the applications.

### Classical Protocol Layer 133:

At the classical protocol layer 133, several essential steps are executed to facilitate entanglement distribution between the quantum service provider and the client application. First, a quantum link 131A is negotiated between the telecommunication network provider 105 and the application 115. The quantum link 131A is defined by its physical transmission medium, such as a fiber channel, and/or by the photon frequency used for quantum state transfer. Next, a time bin is negotiated between the telecommunication provider 105 and the application 115. Since the successful transmission of quantum states cannot be guaranteed due to decoherence or fiber attenuation, and because quantum states cannot be measured without destruction, only a start time bin and a repetition frequency are negotiated. This ensures that photons are transmitted within pre-defined time slots. The protocol layer 133 ensures that this synchronization occurs at both the source node and the destination node simultaneously.

### Protocol Execution at the Start Time:

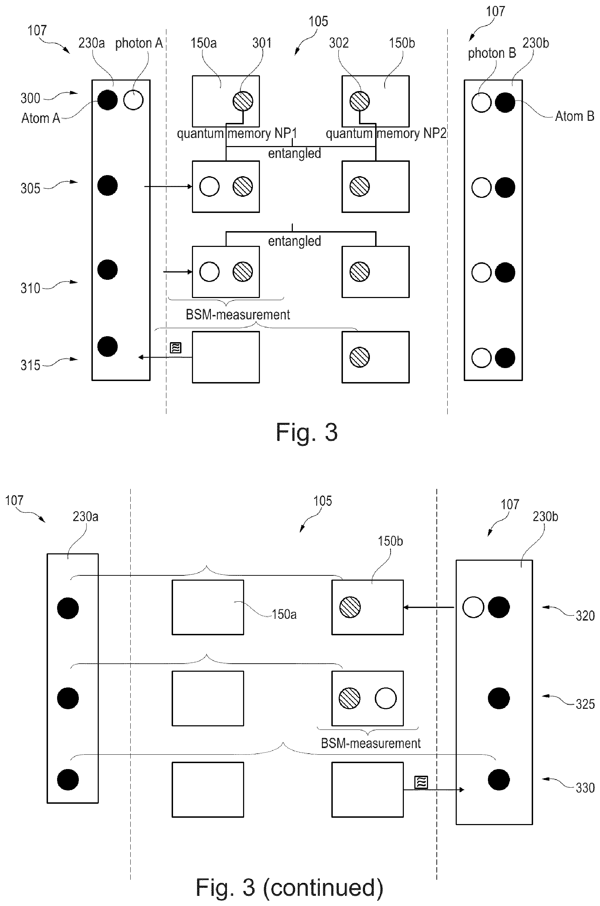

At the negotiated start time, the classical protocol layer 133 executes the following steps:
1. Querying and Reserving Entangled Photon States: The protocol layer 133 uses a classical metadata memory of the telecommunication provider 165 (MDB) to query and reserve entangled photon states. The quantum states that will be swapped to a client-controlled quantum memory system 107a are marked as "used" in the metadata memory of the telecommunication provider 165, ensuring that they are never reused.
2. Communication between network nodes of the telecommunication provider 160: The protocol layer 133 implemented at a first network node A of the telecommunication provider 160A and a second network node B of the telecommunication provider 160B is used for the communication to ensure proper extraction of entangled photon pairs from the telecommunication provider's 105 infrastructure, wherein the protocol layer 133 at the first network node A of the telecommunication provider 160A communicates the logical IDs (ID:QSPs) of reserved photons to the second network node of the telecommunication provider 160B allowing the correlated entangled photons to be selected accordingly in the respective quantum memory 150a,150b.
3. Opening a Quantum Link 131A: Within a Quantum Network Layer , the telecommunication provider 105 and the client application 115 establish a quantum link 131A at the requested start time, wherein the quantum link 131A (a passive optical connection) is used to transmit photons. The entanglement distribution process between the network nodes of the telecommunication provider 160A, 160B and the client application 115 is initiated.
   At the first time bin, the client application 115 sends a photon A (atom-photon entanglement) to the provider's Quantum mechanical API 155 (Q-API). The Q-API 155 forwards and stores the received photon in the provider's quantum memory 150.
   At a later time bin, a Bell State Measurement (BSM) by using the Bell State Measurement-module 210 is conducted on the atoms storing the entangled photons. The quantum memories store photons, where one photon is entangled with the client application and the other with the network node. A BSM is performed on the atoms storing these photons. Alternatively, the quantum memories emit the stored photons, one entangled with the application and the other with the peer network node, and an optical Bell State Measurement is conducted. The exact BSM procedure is known to the person skilled in the art. The Bell State Measurement-module 210 is technically implemented as part of the Q-API 155 architecture building block.
4. Processing Measurement Results and Managing Entanglement: The results of the Bell State Measurements are sent via the classical protocol layer 133 via the Classical High-Level API 200 using classical messages tagged with the session ID. If the entanglement swap is successful (projection into a Bell State), the photons are marked as entangled at the application level. If the swap fails (no projection into a Bell State), the quantum memory 150 storing the involved atoms can be reinitialized and overwritten for subsequent use. The results of the Bell State Measurements (BSMs) are transmitted to the protocol layer 133 of the EDaaS infrastructure, where they are temporarily stored. Once the second BSM result becomes available and both BSMs are positive, the EDaaS infrastructure proceeds to notify the respective applications of the successful entanglement swap.
   As a result, the entanglement previously shared between a first quantum stored at the first network node of the telecommunication provider 160A and a second quantum state 302 stored at the second network node of the telecommunication provider 160B is now transferred to applications A and B, enabling direct quantum communication between them. This will be explained in detail within the context of Fig. 3.
5. Repetition of the Process: The process is repeated according to the negotiated repetition rate, with photons transmitted within predefined time bins. The session remains open on the protocol layer 133 as long as required. Typically, the client application closes the session once a sufficient number of redundant photon pairs have been successfully swapped. However, due to short coherence times, certain client applications may require permanent quantum links 131A to maintain continuous entanglement.

The process can be executed in parallel at other network nodes within the decoherence time of the entangled photon states. This results in a final configuration where entangled photonic states are established in one or two Client-Controlled Quantum Memory Systems 107a. In principle is possible that one Client-Controlled Quantum Memory System 107a stores the entangled quantum states in one or two respective quantum memories. However, it is also possible that first Client-Controlled Quantum Memory System 107a stores one quantum state in its quantum memory 150 and that a second Client-Controlled Quantum Memory System 107a source the entangled quantum state in its quantum memory 150. Nevertheless, in all of these variations, the application 115 has direct access to the entangled quantum states.

The quantum link layer 131 process is executed by individual components within the System for Distributing Entangled States as a Service 100, as illustrated in Figure 1, just for completeness, some of these components are described once again:
A Software-Defined Network (SDN) is responsible for software-based control of the entanglement distribution network, ensuring that sufficient entangled quantum states are available at every network node.

The ED Service & API manages classical client requests and forwards them to the protocol layer 133 system of the quantum service provider. Additionally, it handles authentication, authorization, and accounting (AAA) of application requests to regulate access to entanglement resources.

The Quantum mechanical API (Q-API) 155 includes an inward processing component. A photon originating from a client-controlled quantum memory system 107a must be forwarded and processed to enable entanglement swapping from the network provider's network nodes to the application's quantum memory system. To achieve this, a point-to-point quantum link 131A must be established. Furthermore, the Q-API 155 must support Bell State Measurements (BSM), whether photonic or atomic, to execute entanglement swapping operations.

The Quantum Link Layer 131 must be capable of synchronization and cooperation with quantum systems that are not proprietary to the network provider's EDaaS service. While this disclosure does not focus on implementation details, it is assumed that technology alignment will be required to address compatibility checks, error correction techniques, and variations in quantum fidelity between different quantum systems.

The Classical Protocol Layer 133 is responsible for managing entanglement distribution sessions, including configuring and maintaining quantum links 131A, conveying the results of Bell State Measurements, and handling classical session management between client applications and the network provider.

The Management Systems oversee the operation of individual devices across multiple OSI layers, both within the network provider's infrastructure and at the application plane. These systems include time and frequency synchronization components, ensuring alignment between the different operational planes involved in quantum state distribution.

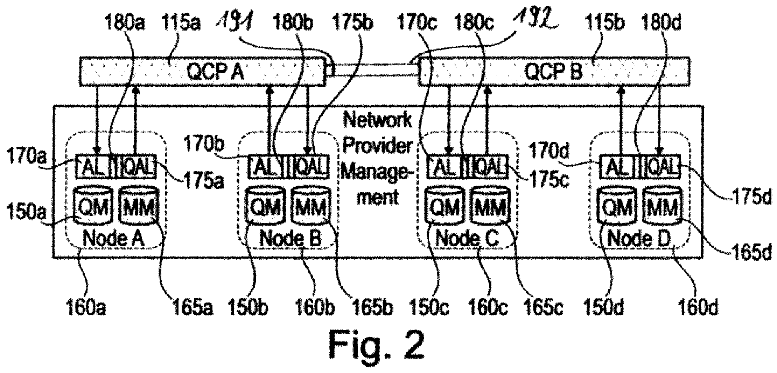

Fig. 2 shows the principal architecture of network nodes of the telecommunication provider 160 of a state-of-the-art implementation without client-controlled quantum memory 230. Nevertheless, Fig. 2 is shown because it illustrates the communication of the quantum memories 150a-d with their respective metadata memories 165a-d.

Fig.2 shows four network nodes 160a-d each having a respective Quantum Memories 150 a-d (QM), classical Metadata Memories 165a-d (MM), Abstraction Layers 170a-d (AL) and/or Quantum Abstraction Layers 175a-d (QAL). Quantum Communication Protocol 115a as a quantum application 115 interacts with the network node 160a and the network node 160b by using the respective abstraction layer 170a,b using a classical interface so that the respective network nodes 160a,b expose a set of entangled quantum states to the quantum communication protocol 115a via the respective quantum abstraction layer 175a,b. The entangled set of photons can then be used for the use cases described above or the state-of-the-art use cases without quantum memories at the premise of the client. The quantum abstraction layer 175 can be realized by the quantum API 175. Fig. 2 also shows a classical communication channel 191 and/or a quantum communication channel 192 that enable the applications to communicate with each other.

Photonic quantum states are stored in the quantum memories 150a-d (QM) at each network node 160a-d. Respective photons stored in one network node 160a are assumed to have a high degree of entanglement with partner photons being stored in another network node 160b-d, i.e., two photons stored in quantum memories at node 160a and node 160b may be entangled. The coherence time of the QM defines the storage duration of the entangled photons. The longer the coherence time is, the higher is the probability that these two photons are still in an entangled state after a certain time has passed. Only those photons which are still in an entangled state are useful for the quantum communication protocols 115.

The implementation makes use of a combination of both a classical memory 165 as metadata memory 165 and the quantum mechanical memory 150 to store, to inventory, and/or to expose distributed entangled photonic states to users. According to the invention, this combination can now also be introduced at the network node of the application 162 as Fig. 1 shows the client-controlled Quantum memory 230 as well as the associated client metadata memory 232. In particular, the metadata memory 165, 232 mirrors the information of the quantum states inside the quantum memory 150, 230 so that by using classic APIs 110c, which means non-quantum APIs, applications obtain information and request the exposure of quantum states easily with current classical protocols.

The QM 150 is a device to store, select and/or expose photonic quantum states.
- Storage: entangled photons are stored in the QM 150, 230. This procedure requires the QM to expose a physical storage address to the MM 165, 232 after successful storage of a photon. However classical IT system are in general not compatible to communicate directly with the QM. For this communication the respective metadata memory of the telecommunication provider 165 with its classical API 110 is used.
- Selection and/or Read-out: the QM must be capable of releasing a certain stored entangled photon based on a physical storage address to the user or to the respective quantum communication protocol 115a,b. The quantum states should not be changed by the storage and selection process.

QMs do already exist in laboratories. QMs are currently limited by the coherence time to preserve quantum states in memories. The physical address can be a sequential number of a quantum dot or color centrum. Alternatively, the address could be a dedicated ion in a particle trap.

The (Classical) Metadata Memory (MM) 165, 232 interacts with the quantum memory 150,230 within a network node. It associates or mirrors metadata with each quantum state stored in the quantum memory in form accessible to common classical non-quantum-mechanical protocols. This comprises a 1:1 relationship, meaning that exactly one record in the metadata storage is assigned to each stored quantum-mechanical state within the quantum memory 150.

The data associated with the quantum state QM in the metadata memory 165 comprise:
- Physical address in the quantum memory / Quantum dot address (PhyID);
- Logical ID of the stored photon pair (LPID);
   ∘ The Logical ID can be considered as being the name of a first quantum mechanical state so that it can be compared with the Logical ID of a second quantum mechanical state in order the evaluate if the states have been generated as an entangled pair;
- Generation timestamp, Time tag and/or Lifetime (valid until time X);
   ∘ The lifetime can be the coherence or a function of the coherence time;
- Wavelength or Frequency, and/or
- an ID of the partner node.

With this metadata, it is possible to identify an entangled state based on its properties such as frequency or partner node and trigger its exposure from the quantum memory using its physical address. The logical processes of the control layers between the application level, network level, and quantum memory all operate through the metadata memory 165 by using the abstraction layer 170.

Possible quantum protocols that can be used within the context of the invention are known to the person skilled in the art but can also be found under https://wiki.veriqloud.fr/index.php?title=Protocol_Library.

The quantum communication protocols 115 and/or the quantum applications need a pair of quantum states, in particular photons, which are in an entangled state with each other. Therefore, according to another aspect of the invention techniques are provided to ensure that entangled photons are distributed. Furthermore, as the coherence time correlates only to a probability that the quantum states are still in an entangled state it is beneficial to apply redundancy measures because one can never be 100% sure that two quantum states are still entangled. A possible redundancy measures is to expose more than one photon.

Fig. 3 shows an inventive method for providing entangled quantum states to a client by using the Client-Controlled Quantum Memory System 107a.

The method uses the Client-Controlled Quantum Memory System 107a and the 'overall' System for Distributing Entangled States 100, the method comprising the following steps, in particular in the following order:
step 300: at the client system 107 site: providing photon A in a first client-controlled quantum memory 230a together with atom A and providing photon B in a second client-controlled quantum memory 230b together with atom B. At the telecommunication provider 105 side: providing a first quantum state 301 in a first quantum memory of a first network node 150a, providing a second quantum state 302 in a second quantum memory of a second network node 150b, wherein the first quantum state 301 and the second quantum state 302 are an entangled pair, in particular and entangled pair of photons.
step 305: sending, by the client-controlled quantum memory system 107a, the photon A that is in an entanglement state with the atom A to the first quantum memory of the first network node 150a and receiving, by the first network node, photon A
step 310: performing, by the first network node, an Entanglement Measurement, in particular a Bell State Measurement (BSM), on photon A and the first quantum state 301 stored by the first quantum memory of network node 150a, wherein the quantum state has a Logical ID:QSP,
step 315: extracting, by a first provider-processing unit of the first network node, information where the respective entangled partner quantum state 302, i.e. the second quantum state 302, having the same Logical ID:QSP is stored; and providing, by the first network node, the first result of the Entanglement Measurement. It is possible that the information about the respective entangled partner quantum state having the same Logical ID:QSP to the client-controlled quantum memory system 107a. It is preferred that this information is not immediately forwarded to the clients, but rather retained within the protocol layer 133 of the EDaaS infrastructure. After execution of step 330, the protocol layer 133 evaluates the results of both Bell State Measurements (BSMs). If both measurements are positive, the protocol layer 133 proceeds to inform the respective applications of the successful entanglement swap.
step 320: sending, by the client-controlled quantum memory system 107a, the photon B that is in an entanglement state with the atom B to the second quantum memory of a second network node 150b, in particular if the first result of the Entanglement Measurement was positive;
step 325: receiving, by the second network node, photon B and performing an Entanglement Measurement on photon B and the entangled partner quantum state 302, i.e. the second quantum state 302, having the Logical ID:QSP provided by the second network node;
step 330: providing, by the second network node, a second result of the Entanglement Measurement to the Classical API 110 for transmission to the client-controlled quantum memory system 107a; determining, by the client-controlled quantum memory system 107a, based on the received Entanglement Measurement results from the first and second network nodes, whether both the first and the second Entanglement Measurements were positive and hence entanglement swapping was successful, and if so, making the entangled quantum states available for the application 115, in particular the quantum application 115, at the clients premise.

A Bell State Measurement determines whether two quantum particles, such as photons, are in one of four specific entangled states. If the measurement projects the photons into one of these states, the entanglement is successfully transferred. In the method of the invention, a first Bell State Measurement is performed at the first network node on the received photon A and a pre-stored entangled quantum state. If successful, entanglement is swapped, and information about the corresponding entangled partner quantum state can be retained within the protocol layer 133 of the EDaaS infrastructure. If this first measurement is positive, the client system 107 sends photon B to the second network node, where a second Bell State Measurement is conducted. If this second measurement is also positive, entanglement swapping is complete, establishing an entanglement link between the client-controlled quantum memory 230 and the application's quantum memory. The results of both measurements are sent to the client system 107, which verifies successful swapping before making the entangled quantum states available for quantum communication.

A Bell State Measurement (BSM) has four possible outcomes, corresponding to the four maximally entangled Bell states. These results indicate whether two qubits (such as photons) are in one of these entangled states: The first Bell state indicates that the two photons are correlated, meaning they have the same quantum state when measured. The second Bell state also indicates correlation but with a phase difference, meaning that the entanglement includes an additional phase shift in their relationship. The third Bell state indicates that the two photons are anti-correlated, meaning their measurement outcomes are always opposite. The fourth Bell state is similar to the third but with an additional phase difference, modifying the relative phase between the quantum states.

If a BSM detects any of these four states, entanglement swapping is successful, meaning that the remaining quantum states at separate locations inherit the entanglement. If no Bell state is detected, the swap fails, and the quantum memories must be reinitialized before attempting another entanglement process.

In a nutshell, the invention enables client-controlled access to entangled quantum states while integrating quantum communication into existing telecom networks. Commercial entangled photon sources and experimental quantum memories already exist, and fiber optic networks can support quantum state transmission if active components are avoided. Additionally, precise time synchronization technologies allow time-slot-based photon addressing. The innovation lies in integrating these technologies within telecom operator networks and making them available to customers through abstraction interfaces. By centralizing quantum memory management within the telecom infrastructure, the invention provides a flexible and scalable quantum communication service. This approach facilitates the practical adoption of quantum technologies, enabling widespread deployment of quantum networking and laying the foundation for future advancements in secure communication.

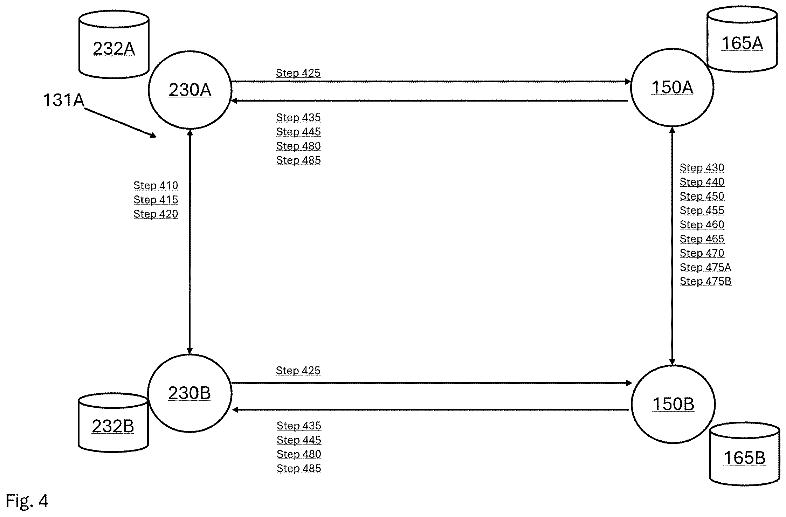

According to the embodiment of Fig. 4, the invention provides a system and method for initializing and managing a quantum link 131A that enables controlled entanglement swapping between different network nodes in a quantum communication network. The quantum link 131A ensures efficient entanglement distribution, synchronization, and metadata management between client and provider quantum nodes.

Fig. 4 shows client-side and provider-side quantum memory nodes and associated metadata databases. 230A represents the quantum memory of a network node of Client A, while 232A is its associated metadata database (MM). Similarly, 230B represents the quantum memory of a network node of Client B, with 232B as its metadata database. On the provider side, 150A and 150B are the quantum memories of network nodes of Provider A and Provider B, respectively, while 165A and 165B are their associated metadata databases. The text of the steps of the method is written in Fig. 4 between the entities that work together to execute the respective steps: e.g. Step 410 is executed between client A and client B, Steps 435 between Client A and Provider A, and between client B and provider B, respectively; and step 430 between Provider A and Provider B.

The process begins with Step 410, where the quantum link 131A is initialized, indicating that entanglement is required. In Step 415, the client and provider negotiate the quantity, timing, and quality of service (QoS) for entanglement exchange. The Quantum Link ID is exchanged in Step 420, followed by the request for an entanglement link in Step 425, Get Entanglement Link (Link ID, quantity, timing) specifying the Link ID, quantity, and timing for entanglement distribution.

In Step 430, the system plans and implements the entanglement distribution link, determining the path, capacity, frequency, rate, and redundancy. The system then commits the entanglement parameters in Step 435, finalizing the start timestamp, frequency, rate, and Link ID. The entanglement distribution process is executed in Step 440. In Step 445, the photon is transmitted, and MM 232B and/or MM 232A are updated with the LPID, timestamp, link information, and partner details. To establish an entanglement-ready state, Step 450 stores a photon from the quantum memory of client A 230A in quantum memory of provider A 150A.

Following storage, entanglement swapping is initiated in Step 455, where quantum memory of provider A 150A and quantum memory of provider B 150B search for an entangled photon pair with a matching Logical Pair ID (LPID). In Step 460, an Entanglement Measurement, in particular a Bell State Measurement (BSM), is performed on the photon stored in the quantum memory of client A 230A and quantum memory of provider A 150A. Similarly, Step 465 performs a second BSM on the photon stored in the quantum memory of client B 230B and quantum memory of provider B 150B.

Once the measurements are complete, Step 470 can transmit the BSM results between the quantum memory of client A 230A and quantum memory of provider B 150B, and vice versa; or the results are retained within the protocol layer 133 of the EDaaS infrastructure and are only shared in case of the successful BSM measurements. If both results are positive, the entanglement swap is successful, meaning that the previously separate quantum states at quantum memory of client A 230A and quantum memory of client B 230B are now entangled. Metadata updates are performed in Step 475A, where quantum memory of provider A 150A sends information to the quantum memory of client A 230A over a classical channel, allowing the metadata memory of client A 232A to update the LPID of the entangled quantum state. Simultaneously, in Step 475B, quantum memory of provider B 150B sends information to the quantum memory of client B 230B, allowing the metadata memory of client B 232B to update the LPID of the entangled quantum state.

The entanglement results are received in Step 480, and in Step 485, if both BSM results are successful, MM of client A 232A and MM of client B 232B are updated by calculating the LPID based on the timestamp of the entanglement swap and the identifier of the network link.

The quantum link 131A enables client-controlled entanglement state management, allowing clients to negotiate, request, and track entangled states rather than relying on a fully centralized system.

In one embodiment, there is no required order in which either the application associated with the first network node, or the application associated with the second network node initiates interaction. The Entanglement Measurements, in particular Bell State Measurements (BSMs), are performed periodically and independently of each other. In each synchronization cycle, the EDaaS infrastructure selects, from the respective metadata memory (MM), a pair of atoms entangled via a common ID:QSP and retrieves a corresponding photon from the respective application-side quantum memory. The selected photons are released and subjected to BSMs, and the measurement results are temporarily retained within the protocol layer 133 of the EDaaS infrastructure without immediate transmission to the applications.

Only if the EDaaS detects two successful BSMs-each involving one atom of the same entangled pair identified by a common ID:QSP-the EDaaS infrastructure notifies both applications. The notification includes metadata necessary for updating the local metadata memories (MMs) on the client side. This metadata comprises the previous LPID of the quantum state from Application A, which is known to the EDaaS from the MM of the first network node, the previous LPID of the quantum state from Application B, which is retrieved analogously from the MM of the second network node, and the timestamp of the second BSM, which acts as a temporal anchor for entanglement state confirmation.

Based on this notification, Application A and Application B update their respective MMs. Each application locates the MM entry corresponding to its own previous LPID and computes a new LPID that uniquely identifies the newly established entangled state. The new LPID may be derived by combining the previous LPID of Application A, the previous LPID of Application B, the timestamp of the second BSM, and a link identifier defined within the application network topology, which may operate independently of the EDaaS infrastructure.

From the application's point of view, the EDaaS operates as a black box, and the session ID used for addressing the respective provider nodes serves as the basis for identifying the entanglement partner. The applications can define and manage their own logical link identifiers without relying on internal structures of the quantum service provider.

### Reference signs:

- 100: System for Distributing Entangled States as a Service to clients
- 105: telecommunication provider
- 107: client system,
- 107a: Client-Controlled Quantum Memory System
- 110: communication interface, classical API
- 112: Entanglement Distribution module
- 115: quantum communication protocol/application
- 120: quantum channel
- 125: Software Defined Network
- 130: quantum physical layer
- 131: quantum link layer
- 131A: quantum link
- 133: classical protocol layer
- 150: (provider controlled) quantum memory (QM)
- 150a: first quantum memory (of first network node)
- 150b: second quantum memory (of second network node)
- 155: quantum mechanical API
- 160: network node of telecommunication provider
- 160A: first network node of telecommunication provider
- 160B: second network node of telecommunication provider
- 162: network node of the application
- 165: metadata memory of telecommunication provider
- 200: a Classical High-Level API
- 210: Bell State Measurement-module
- 220: Timing-synchronization-modules
- 230: client-controlled quantum memory
- 232: metadata memory of client node
- 240: network provider management system
- 250: application management system
- 260: ED Service API
- 261: service layer
- 301: first quantum state
- 302: second quantum state

## Claims

1. A Client-Controlled Quantum Memory System (107a) for Providing Entangled Quantum States to Applications, comprising:
• a client-controlled quantum memory (230) configured to receive, store, and/or provide entangled quantum states for use by an application,
• a Quantum mechanical API (155) configured to send photon A obtained from the client-controlled quantum memory (230) to a quantum service provider, wherein photon A and its corresponding atomic state in the client-controlled quantum memory (230), atom A, are in an entanglement state,
• a Classical API (110) configured to communicate with the quantum service provider, wherein the Classical API (110) is configured to send a request of a result of an Entanglement Measurement, in particular a Bell State Measurement (BSM) performed on photon A and/or to receive the result of the Entanglement Measurement from the quantum service provider,
• wherein the system is configured to:
∘ store entangled quantum states independently of the quantum service provider,
∘ enable applications, in particular a quantum application of the client system (107), to access pre-stored entangled quantum states directly from the client-controlled quantum memory (230) if the Entanglement Measurement was positive.

2. The Client-Controlled Quantum Memory System (107a) of claim 1, further comprising a client-metadata memory, wherein a dataset A of the client-metadata memory stores the following information:
• i) a logical ID "ID:Client:AB" of photon A and/or atom A,
• ii) a result of the Entanglement Measurement of photon A,
• iii) a result of an Entanglement Measurement of photon B;
• iv) a physical storage address of atom A within the client-controlled quantum memory (230), and/or
• v) a timestamp indicating the timepoint at which the entanglement state was generated or swapped by the EDaaS or the timestamp on which the photon was emitted by the client-side QM, so that atom and photon A share the entanglement state.

3. The Client-Controlled Quantum Memory System (107a) of any of claims 1 or 2, further comprising a processing unit configured to:
• retrieve and evaluate the result of the Entanglement Measurements of photon A and a photon B having the same Logical ID "ID:Client:AB" as photon A, and
• if both results are positive, trigger the exposure of the quantum states A and B related to photons A and B to the quantum application.

4. The Client-Controlled Quantum Memory System (107a) of any of claims 1 to 3, further comprising a synchronization module configured to synchronize the time between the quantum service provider and the application to establish unified time bins for processing entanglement swapping operations.

5. The Client-Controlled Quantum Memory System (107a) of any of claims 1 to 4, wherein a request for receiving entangled quantum states sent over the Classical API (110) comprises:
• i) a required rate for entanglement swapping;
• ii) a name or ID of a network node, wherein the network node comprises a quantum memory;
• iii) a name or ID of the quantum service provider;
• iv) a frequency of the transmission link;
• v) a start time, a stop time bin, and/or repetition time bin; and/or
• vi) a location of the Client-Controlled Quantum Memory System (107a).

6. The Client-Controlled Quantum Memory System (107a) of any of claims 1 to 5, further comprising a link protocol configured to assess the rate of positive Entanglement Measurements and:
• i) if the rate of positive Entanglement Measurements is higher than a certain threshold, decrease the rate of transmission of photons or the rate of BSM measurements, and/or
• ii) if the rate of positive Entanglement Measurements is lower than a certain threshold, increase the rate of transmission of photons or the rate of BSM measurement and/or select a second quantum link (131A), a quantum link (131A) with higher bandwidth or a second provider network access node.

7. A System for Distributing Entangled States as a Service (100), comprising:
• at least one client-side quantum memory system of any of claims 1 to 6,
• a first network node of a quantum service provider comprising a first quantum memory, in particular a first provider quantum memory; configured to store entangled quantum states and wherein the first network node is configured to enable entanglement swapping,
• a Quantum-exchange link established between the client-side quantum memory system and the first network node of the quantum service provider, the Quantum-exchange link being configured to:
∘ transmit photon A from the client-side quantum memory system to the first quantum memory of the first network node of the quantum service provider, wherein photon A and its corresponding atomic state in the client-side quantum memory system, atom A, are in an entanglement state,
• a Classical link established between the client-side quantum memory system and the first network node of the quantum service provider, the Classical link being configured to:
∘ transmit a request for receiving a result of a first Entanglement Measurement, in particular a Bell State Measurement (BSM), performed by the first network node between the photon A and a quantum state SP₁, in particular a photon SP₁, within the first quantum memory of the quantum service provider and/or receive, from a protocol layer (133) of the quantum service provider infrastructure, a notification comprising the result of two successful Entanglement Measurements and associated metadata, enabling the client-side quantum memory system to update its metadata memory accordingly;
• an entanglement swapping module associated to the first network node of the quantum service provider, configured to:
∘ perform the first Entanglement Measurement on photon A and the entangled quantum state SP1, wherein the quantum state SP1 has a Logical ID:QSP stored in the first quantum memory of the first network node of the quantum service provider, and/or evaluate a result of the first Entanglement Measurement and provide the result to the Classical API (110).

8. The System for Distributing Entangled States as a Service (100) of claim 7, wherein the first network node further comprises:
• a first provider-metadata memory, wherein a dataset of the certain entangled quantum state having the Logical ID:QSP comprises information, in particular the location and/or the communication address, about a second quantum memory of the quantum service provider where the respective entangled partner quantum state having the same Logical ID:QSP is stored.

9. The System for Distributing Entangled States as a Service (100) of any of claims 7 or 8, further comprising a second network node of the quantum service provider, wherein the second network node comprises:
• a Quantum mechanical API (155) interface for receiving photon B from a second client-side quantum memory system,
• a Classical API (110) for communication the second client-side quantum memory system for:
∘ receiving the Logical ID:QSP, and
∘ providing a result of a second Entanglement Measurement to the second client-side quantum memory system,
• a second quantum memory configured to store the respective entangled partner quantum state having the same Logical ID:QSP,
• a second entanglement swapping module configured to:
∘ perform the second Entanglement Measurement on photon B and the entangled quantum state having the Logical ID:QSP provided by the second network node,
∘ evaluate a result of the second Entanglement Measurement, and provide the result to the Classical API (110).

10. The System for Distributing Entangled States as a Service (100) of any of claims 8 or 9, wherein the first network node and the second network node each comprise a provider-timing-synchronization module, wherein the provider-timing-synchronization modules are configured to synchronize the timing between the first network node, the second network node, and the synchronization module of the client-controlled quantum memory system (107a) to ensure that entanglement swapping operations are performed within unified time bins, and wherein the client-controlled quantum memory system (107a) negotiates a start time bin, an end time bin, and/or a repetition frequency.

11. The System for Distributing Entangled States as a Service (100) of any of claims 7 to 10, wherein the quantum service provider is a telecommunication provider (105).

12. A method for providing entangled quantum states to a client by using a Client-Controlled Quantum Memory System (107a) of any of the claims 1 to 6 and a System for Distributing Entangled States (100) of any of the claims 7 to 11, the method comprising the following steps, in particular in the following order:
• sending, by the client-controlled quantum memory system (107a), a photon A that is in an entanglement state with an atom A to a first network node of the quantum service provider,
• receiving, by the first network node, photon A and performing an Entanglement Measurement, in particular a Bell State Measurement (BSM), on photon A and a certain entangled quantum state provided by the first network node, wherein the quantum state has a Logical ID:QSP,
• extracting, by a first provider-processing unit (231) of the first network node, information where a respective entangled partner quantum state having the same Logical ID:QSP is stored,
• providing, by the first network node, the first result of the Entanglement Measurement and the information about the respective entangled partner quantum state having the same Logical ID:QSP to the client-controlled quantum memory system (107a),
• sending, by the client-controlled quantum memory system (107a), a photon B that is in an entanglement state with an atom B to a second network node of the quantum service provider, in particular if the first result of the Entanglement Measurement was positive,
• receiving, by the second network node, photon B and performing an Entanglement Measurement on photon B and the entangled partner quantum state having the Logical ID:QSP provided by the first network node,
• providing, by the second network node, a second result of the Entanglement Measurement to the Classical API (110) for transmission to the client-controlled quantum memory system (107a),
• determining, by the client-controlled quantum memory system (107a), based on the received Entanglement Measurement results from the first and second network nodes, whether both the first and the second Entanglement Measurements were positive and hence entanglement swapping was successful, and if so, making the entangled quantum states available for an application, in particular a quantum application.

13. The method of claim 12, wherein the client-controlled quantum memory system (107a) starts and/or finishes a request for distributing entangled quantum states.

14. The method of claim 12 or 13, wherein the client-controlled quantum memory system (107a) and the first and second network nodes of the quantum service provider synchronize their timing to ensure that entanglement swapping operations are performed within unified time bins, and wherein the client-controlled quantum memory system (107a) negotiates a start time bin, an end time bin, and/or a repetition frequency.

15. The method of any of claims 12 to 14, wherein the client-controlled quantum memory system (107a) stores metadata related to entanglement operations, the metadata comprising:
• a Logical ID associated with each entangled quantum state,
• results of Entanglement Measurements received from the first and second network nodes,
• a physical storage address of each entangled quantum state within the client-controlled quantum memory system (107a), and/or
• a timestamp indicating the timepoint at which the entanglement state was generated or updated.
